(19) Europäisches Patentamt / European Patent Office / Office européen des brevets

(11) **EP 4 525 125 A1**

(12) **EUROPEAN PATENT APPLICATION**
published in accordance with Art. 153(4) EPC

(43) Date of publication:
**19.03.2025 Bulletin 2025/12**

(21) Application number: **22964819.1**

(22) Date of filing: **11.11.2022**

(51) International Patent Classification (IPC):
**H01M 10/058** (2010.01)  **H01M 10/0525** (2010.01)
**H01M 4/139** (2010.01)

(52) Cooperative Patent Classification (CPC):
**H01M 4/139; H01M 10/0525; H01M 10/058;**
Y02E 60/10

(86) International application number:
**PCT/CN2022/131242**

(87) International publication number:
**WO 2024/098350 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **JIN, Haizu**
  **Ningde, Fujian 352100 (CN)**
- **CHEN, Ning**
  **Ningde, Fujian 352100 (CN)**
- **SHI, Dongyang**
  **Ningde, Fujian 352100 (CN)**
- **LV, Ruijing**
  **Ningde, Fujian 352100 (CN)**
- **LIU, Zhi**
  **Ningde, Fujian 352100 (CN)**
- **WANG, Yuzhen**
  **Ningde, Fujian 352100 (CN)**
- **LI, Baiqing**
  **Ningde, Fujian 352100 (CN)**

(74) Representative: **Kraus & Lederer PartGmbB**
**Thomas-Wimmer-Ring 15**
**80539 München (DE)**

(54) **BATTERY AND ELECTRIC DEVICE**

(57) This application relates to a battery and an electric apparatus. A ratio of a capacity per unit area of a negative electrode of the battery to a capacity per unit area of a positive electrode of the battery is referred to as an NP ratio. The NP ratio of the battery is greater than or equal to 1.105, allowing the negative electrode potential corresponding to an upper limit of SOC of the battery to be higher than potential for crystalline phase formation, without BMS control or forced charging/discharging. This can alleviate or avoid battery memory effects, enabling maximum utilization of the capacity of the battery and improving energy efficiency of the battery.

**5**

FIG. 1

EP 4 525 125 A1

**Description**

**TECHNICAL FIELD**

This application relates to the field of battery technologies, and in particular, to a battery and an electric apparatus.

**BACKGROUND**

Generally, memory effects occur in nickel-cadmium batteries, to a lesser extent in nickel-metal hydride batteries, and are absent from lithium batteries. However, with increasing demand for batteries having higher energy density, pure graphite negative electrodes are no longer able to fully meet requirements, and silicon with high specific capacity has become the next-generation negative electrode material. Unlike pure graphite negative electrodes, silicon-doped negative electrodes come with a memory effect issue which is one of the important technical problems that need to be solved.

In the prior art, a battery management system (Battery Management System, BMS) sends a request to a vehicle controller to enter a memory effect elimination mode, so as to perform full charging and discharging of the battery to minimize the memory effect.

However, in the prior art, forcibly performing full charging and discharging through BMS not only causes inconvenience and troubles to users but also leads to certain energy waste.

**SUMMARY**

In view of the foregoing problems, this application provides a battery and an electric apparatus that can solve the inconvenience and troubles caused to users in the prior art, as well as the energy waste problem.

According to a first aspect, this application provides a battery, where a ratio of negative electrode capacity per unit area to positive electrode capacity per unit area of the battery is an NP ratio, where the NP ratio is greater than or equal to 1.105.

In technical solutions of some embodiments of this application, the NP ratio of the battery, which is the ratio of the negative electrode capacity per unit area to the positive electrode capacity per unit area (or NP ratio), is greater than or equal to 1.105, so that the negative electrode potential corresponding to an upper limit of SOC of the battery remains higher than the potential for crystalline phase formation, thereby preventing the occurrence of memory effects during battery usage. Therefore, compared to the prior art, in some embodiments of this application, memory effects of the battery can be alleviated or avoided by adjusting NP ratio parameters of the battery, without BMS control or forced charging and discharging, allowing for maximum utilization of the battery capacity and improving the energy utilization efficiency of the battery.

In some embodiments, the NP ratio of the battery is greater than or equal to 1.105 and less than or equal to 1.2.

In some embodiments, a weight percentage of silicon material in negative electrode active substance is 3% to 50%; optionally, the weight percentage of silicon material in the negative electrode active substance is 3% to 25%.

In some embodiments, the coating weight per unit area of the positive electrode ranges from 6.5 mg/cm$^2$ to 29 mg/cm$^2$; optionally, the coating weight per unit area of the positive electrode ranges from 9 mg/cm$^2$ to 21 mg/cm$^2$; and/or the coating weight per unit area of the negative electrode ranges from 3.9 mg/cm$^2$ to 16 mg/cm$^2$; optionally, the coating weight per unit area of the negative electrode ranges from 3.9 mg/cm$^2$ to 13 mg/cm$^2$.

In some embodiments, a capacity per gram of the positive electrode active substance ranges from 130 mAh/g to 230 mAh/g; optionally, the capacity per gram of the positive electrode active substance ranges from 150 mAh/g to 218 mAh/g; and/or
a capacity per gram of the negative electrode active substance ranges from 340 mAh/g to 800 mAh/g; optionally, the capacity per gram of the negative electrode active substance ranges from 360 mAh/g to 700 mAh/g.

In some embodiments, the positive electrode active substance is capable of deintercalating and intercalating lithium ions; optionally, the positive electrode active substance includes:

one or more of lithium cobalt oxide, lithium nickel oxide, lithium manganese oxide, lithium nickel manganese oxide, lithium nickel cobalt manganese oxide, and lithium nickel cobalt aluminum oxide; and
a compound derived from transition metal or non-transition metal;
further optionally, the positive electrode active substance includes a nickel cobalt manganese ternary material.

In some embodiments, the negative electrode active substance of the battery includes silicon material and carbon material, where the silicon material includes elemental silicon and/or a silicon-containing compound; and/or the carbon material includes at least one of natural graphite, synthetic graphite, mesocarbon microbeads, hard carbon, and soft carbon.

In some embodiments, the silicon-containing compound is at least one of SiOx and silicon carbon, where $0 \leq x < 2$; and/or

the carbon material includes natural graphite and synthetic graphite.

In some embodiments, a proportion of the positive electrode active substance in the positive electrode material layer ranges from 90% to 99%; optionally, the proportion of the positive electrode active substance in the positive electrode material layer ranges from 95% to 98%; and/or

a proportion of the negative electrode active substance in the negative electrode material layer ranges from 90% to 99%; optionally, the proportion of the negative electrode active substance in the negative electrode material layer ranges from 92% to 97%.

According to a second aspect, this application provides an electric apparatus containing the battery according to the first aspect.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

**BRIEF DESCRIPTION OF DRAWINGS**

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, like reference signs denote like components. In the accompanying drawings:

FIG. 1 is a schematic diagram of a battery according to an embodiment of this application;
FIG. 2 is an exploded view of the battery according to the embodiment of this application in FIG. 1.
FIG. 3 is a schematic diagram of a battery module according to an embodiment of this application.
FIG. 4 is a schematic diagram of a battery according to an embodiment of this application;
FIG. 5 is an exploded view of the battery according to the embodiment of this application in FIG. 4; and
FIG. 6 is a schematic diagram of an electric apparatus using a battery in an embodiment of this application as a power source.

Description of reference signs:
1. battery pack; 2. upper box body; 3. lower box body; 4. battery module; 5. battery; 51. housing; 52. electrode assembly; 53. cover plate; and 6. electric apparatus.

**DESCRIPTION OF EMBODIMENTS**

The following specifically discloses embodiments of a battery and an electric apparatus containing the same in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed sequentially, or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated.

For ease of understanding, some terms are introduced in some embodiments of this application.

A positive electrode (or cathode) of the battery mentioned in some embodiments of this application is oxidized during the charging process, and lithium ions can deintercalate from the layered intercalation material of the positive electrode, pass through the electrolyte, and intercalate into the negative electrode (or anode). Correspondingly, the negative electrode of the battery mentioned in the embodiments of this application undergoes oxidation reactions during the discharge process, and lithium ions can deintercalate from the negative electrode, pass through the electrolyte, and reintercalate into the cathode.

The NP (Negative Positive, NP) ratio mentioned in some embodiments of this application refers to a ratio of a negative electrode (or anode) capacity per unit area to a positive electrode (or cathode) capacity per unit area of the battery.

For example, the battery mentioned in some embodiments of this application can include, but is not limited to, silicon-containing secondary batteries.

It is generally recognized that the memory effect of a battery refers to reversible failure caused by a battery not being fully charged and discharged for a long time. Generally, memory effects occur in nickel-cadmium batteries, to a lesser extent in nickel-metal hydride batteries, and are absent in lithium batteries. However, with increasing demand for higher energy density in batteries, pure graphite negative electrodes are no longer able to fully meet requirements, and silicon with high specific capacity has become the next-generation negative electrode material. Silicon-containing lithium-ion batteries cycle within a specific state of charge (State of Charge, SOC) range, and the memory effect may lead to rapid battery capacity decay, affecting battery performance. Therefore, unlike pure graphite negative electrodes, the memory effect caused by silicon-doped negative electrodes is one of the important technical problems that need to be solved.

In the prior art, a BMS sends a request to a vehicle controller to enter a memory effect elimination mode, so as to perform full charging and discharging of the battery to minimize memory effects.

However, in the prior art, forcibly performing full charging and discharging through BMS not only causes inconvenience and troubles to users but also leads to energy waste.

To address the foregoing issues in the prior art, the applicant has discovered that during later stage of charging a silicon-containing battery, the negative electrode has a relatively high SOC while the negative electrode potential is lower than the potential required for formation of the crystalline phase (such as $Li_{15}Si_4$), which is a necessary condition for the generation of memory effects. For example, potential for crystalline phase formation can include but is not limited to 50mV. In other words, as long as the negative electrode potential corresponding to the upper limit of SOC of the battery is greater than the potential for crystalline phase formation, the crystalline phase is not formed, thereby avoiding memory effects during battery usage.

Based on the foregoing considerations, the applicant has found through research that difference between the NP ratio of different batteries and a ratio of their corresponding critical SOC values is smaller than a preset difference (or the NP ratios of different batteries and their corresponding critical SOC values are essentially the same). A designed NP ratio of the battery of this application is determined to be greater than or equal to 1.105 based on a ratio between the NP ratio and the corresponding critical SOC value of any reference battery, so that the negative electrode potential corresponding to the upper limit of the SOC of the battery remains higher than the potential for crystalline phase formation, preventing the occurrence of memory effects during battery usage. Therefore, compared to the prior art, in some embodiments of this application, memory effects of the battery can be alleviated or avoided by adjusting NP ratio parameters of the battery, without BMS control or forced charging and discharging.

A critical SOC of any battery mentioned in some embodiments of this application refers to an SOC threshold corresponding to the memory effect of the battery. It should be noted that when the SOC of the battery is at the critical SOC, the memory effect does not occur on the battery; but once the SOC of the battery exceeds the critical SOC, the memory effect occurs.

In some embodiments, a ratio of the negative electrode capacity per unit area to the positive electrode capacity per unit area of the battery provided in some embodiments of this application is an NP ratio, where the NP ratio is greater than or equal to 1.105. For example, a numerical value of the NP ratio in some embodiments of this application can be obtained based on the NP ratio and the corresponding critical SOC value of any reference battery.

For example, when the NP ratio of the reference battery is 1.05, the critical SOC of the reference battery is 95% SOC. When the NP ratio of the reference battery is increased to 1.07, the critical SOC of the reference battery increases to 96.8% SOC. It can be seen that increasing the NP ratio of the battery can increase the critical SOC of the battery, and ratios between different NP ratios and their corresponding critical SOC values are essentially the same.

In some embodiments of this application, the NP ratio of the battery of this application is determined to be greater than or equal to 1.105 based on the ratio between the NP ratio and the corresponding critical SOC value of any reference battery, so that the critical SOC of the battery in some embodiments of this application can be increased to 100% SOC. That is, the negative electrode potential corresponding to an upper limit of SOC of the battery of this application remains higher than the potential for crystalline phase formation, thereby preventing the occurrence of memory effects (or the battery of this application does not exhibit the memory effects within any SOC range).

For example, the NP ratio of the battery in some embodiments of this application can be greater than or equal to 1.105 and less than or equal to 1.2. This can not only prevent the occurrence of memory effects during battery usage but also maximize the energy density of the battery and save costs.

The negative electrode capacity per unit area in some embodiments of this application can be the product of negative electrode coating weight per unit area, capacity per gram of the negative electrode active substance, and a weight percentage of the negative electrode active substance. The positive electrode capacity per unit area can be the product of positive electrode coating weight per unit area, capacity per gram of the positive electrode active substance, and a weight percentage of the positive electrode active substance.

For example, the NP ratio mentioned in some embodiments of this application can be represented by the following formula (1):

$$\text{NP ratio} = \frac{CW_A * Cap_A * Loading_A}{CW_C * Cap_C * Loading_C} \quad \text{(formula 1)}$$

where CW represents the coating weight per unit area (in mg/cm$^2$), Cap represents the capacity per gram of the active substance (in mAh/g), Loading represents the weight percentage of the active substance, subscript A represents the negative electrode, and subscript C represents the positive electrode.

Certainly, the NP ratio can also be represented by other variations or equivalent formulas of the foregoing formula (1), which are not limited in some embodiments of this application.

In some embodiments, based on the foregoing embodiments, since the difference between the ratio of the NP ratio and the corresponding critical SOC of different batteries is smaller than a preset difference, the NP ratio of the battery in some embodiments of this application can be determined based on the ratio between the NP ratio and the corresponding critical SOC of any reference battery. For example, the reference battery involved in some embodiments of this application can include, but is not limited to, batteries with a conventional NP ratio in the prior art, where the conventional NP ratio can range from 1.01 to 1.08. Correspondingly, the corresponding critical SOC of the reference battery can range from 91.38% to 97.7%.

In a possible implementation, the NP ratio of the reference battery can be obtained based on the design parameters of the reference battery. For example, the NP ratio of the reference battery can be obtained by calculating the ratio of the negative electrode capacity per unit area to the positive electrode capacity per unit area based on the design parameters of the reference battery.

In another possible implementation, the NP ratio of the reference battery can be obtained through testing the reference battery. For example, the negative electrode capacity per unit area and the positive electrode capacity per unit area of the reference battery are measured so that the NP ratio of the reference battery can be obtained based on the ratio of the negative electrode capacity per unit area and the positive electrode capacity per unit area of the reference battery.

For example, in some embodiments of this application, the negative electrode capacity per unit area or the positive electrode capacity per unit area of any battery can be measured based on discharging tests. Certainly, capacity measurements can alternatively be performed using another method, which is not limited in some embodiments of this application.

Certainly, the NP ratio of the reference battery can be obtained through another method, which is not limited in some embodiments of this application.

For example, the critical SOC of the reference battery can be obtained through battery memory effect tests performed on the reference battery. Certainly, the critical SOC of the silicon-containing battery can alternatively be obtained through another method, which is not limited in some embodiments of this application.

The following embodiments of this application describe content related to "the NP ratio of the battery in some embodiments of this application can be determined based on the ratio of the NP ratio and the corresponding critical SOC of any reference battery."

Considering that any batteries have an essentially similar ratio between the NP ratio and the corresponding critical SOC, the NP ratio of the battery in some embodiments of this application can be determined based on the ratio between the NP ratio and the corresponding critical SOC of the reference battery as well as the ratio between the NP ratio and the corresponding critical SOC of the battery in some embodiments of this application.

The critical SOC of the battery in some embodiments of this application can be determined based on design requirements of the battery. For example, if the battery needs to exhibit no memory effect throughout the entire SOC range, the NP ratio corresponding to the critical SOC of the battery can be 100%.

For example, the NP ratio of the battery in the embodiments of this application can be obtained using the following formula (2) based on the ratio between the NP ratio and the corresponding critical SOC of the reference battery as well as the ratio between the NP ratio and the corresponding critical SOC of the battery in the embodiments of this application.

$$x = y * (x0/y0) \qquad \text{formula (2)}$$

where x represents the NP ratio of the battery in some embodiments of this application, x0 represents the NP ratio of the reference battery, y0 represents the critical SOC of the reference battery, and y represents the critical SOC of the battery in some embodiments of this application.

It should be understood that the maximum value of y is 100%. If the battery needs to exhibit no memory effect throughout the entire SOC range, x needs to be greater than or equal to x0/y0.

Certainly, alternatively, the NP ratio of the battery in some embodiments of this application can be obtained using other variations or equivalent formulas of the foregoing formula (2) based on the ratio between the NP ratio and the corresponding critical SOC of the reference battery is combined with the ratio between the NP ratio and the corresponding critical SOC of the battery in some embodiments of this application. This is not limited in some embodiments of this application.

In summary, in some embodiments of this application, the ratio (or NP ratio) of the negative electrode capacity per unit area to the positive electrode capacity per unit area of the battery is greater than or equal to 1.105, so that the negative electrode potential corresponding to the upper limit of the SOC of the battery remains higher than the potential for crystalline phase formation, thereby preventing the occurrence of memory effects during battery usage. Therefore, compared to the prior art, in some embodiments of this application, memory effects of the battery can be alleviated or avoided by adjusting NP ratio parameters of the battery, without BMS control or forced charging and discharging, allowing for maximum utilization of the battery capacity and improving the energy utilization efficiency of the battery.

In some embodiments, based on the foregoing embodiments, a weight percentage of silicon material in the negative electrode active substance of the battery in some embodiments of this application can range from 3% to 50%. Optionally, a weight percentage of silicon material in the negative electrode active substance of the battery in some embodiments of this application can range from 3% to 25%.

For example, the weight percentage of silicon material in the negative electrode active substance of the battery in some embodiments of this application can include, but is not limited to: 3%, 8%, 13%, 21%, 25%, 30%, 35%, 40%, 45%, 50%, or any value in a range between any two of the above values.

In some embodiments, based on the foregoing embodiments, a coating weight per unit area of the positive electrode of the battery in some embodiments of this application can range from $6.5 \text{ mg/cm}^2$ to $29 \text{ mg/cm}^2$. Optionally, the coating weight per unit area of the positive electrode of the battery in some embodiments of this application can range from $9 \text{ mg/cm}^2$ to $21 \text{ mg/cm}^2$.

For example, the coating weight per unit area of the positive electrode of the battery in some embodiments of this application can include, but is not limited to: $6.5 \text{ mg/cm}^2$, $9 \text{ mg/cm}^2$, $11.5 \text{ mg/cm}^2$, $14 \text{ mg/cm}^2$, $16.5 \text{ mg/cm}^2$, $19 \text{ mg/cm}^2$, $21 \text{ mg/cm}^2$, $23.5 \text{ mg/cm}^2$, $26 \text{ mg/cm}^2$, $29 \text{ mg/cm}^2$, or any value in a range between any two of the above values.

In some embodiments, based on the foregoing embodiments, a coating weight per unit area of the negative electrode of the battery in some embodiments of this application can range from $3.9 \text{ mg/cm}^2$ to $16 \text{ mg/cm}^2$. Optionally, the coating weight per unit area of the negative electrode of the battery in some embodiments of this application can range from $3.9 \text{ mg/cm}^2$ to $13 \text{ mg/cm}^2$.

For example, the coating weight per unit area of the negative electrode of the battery in some embodiments of this application can include, but is not limited to: $3.9 \text{ mg/cm}^2$, $5.9 \text{ mg/cm}^2$, $7.9 \text{ mg/cm}^2$, $10 \text{ mg/cm}^2$, $12 \text{ mg/cm}^2$, $13 \text{ mg/cm}^2$, 15

mg/cm$^2$, 16 mg/cm$^2$, or any value in a range between any two of the above values.

In some embodiments, based on the foregoing embodiments, capacity per gram of the positive electrode active substance of the battery in some embodiments of this application can range from 130 mAh/g to 230 mAh/g. Optionally, the capacity per gram of the positive electrode active substance of the battery in some embodiments of this application can range from 150 mAh/g to 218 mAh/g.

For example, the capacity per gram of the positive electrode active substance of the battery in some embodiments of this application can include, but is not limited to: 130 mAh/g, 150 mAh/g, 170 mAh/g, 190 mAh/g, 218 mAh/g, 230 mAh/g, or any value in a range between any two of the above values.

In some embodiments, based on the foregoing embodiments, capacity per gram of the negative electrode active substance of the battery in some embodiments of this application can range from 340 mAh/g to 800 mAh/g. Optionally, the capacity per gram of the negative electrode active substance of the battery in some embodiments of this application can range from 360 mAh/g to 700 mAh/g.

For example, the capacity per gram of the negative electrode active substance of the battery in some embodiments of this application can include, but is not limited to: 340 mAh/g, 360 mAh/g, 380 mAh/g, 400 mAh/g, 420 mAh/g, 440 mAh/g, 460 mAh/g, 480 mAh/g, 500 mAh/g, 520 mAh/g, 540 mAh/g, 560 mAh/g, 580 mAh/g, 600 mAh/g, 620 mAh/g, 640 mAh/g, 660 mAh/g, 680 mAh/g, 700 mAh/g, 720 mAh/g, 740 mAh/g, 760 mAh/g, 780 mAh/g, 800 mAh/g, or any value in a range between any two of the above values.

In some embodiments, based on the foregoing embodiments, the positive electrode active substance of the battery in some embodiments of this application can include materials capable of deintercalating and intercalating lithium ions. Optionally, the positive electrode active substance of the battery in some embodiments of this application can include one or more of lithium cobalt oxide, lithium nickel oxide, lithium manganese oxide, lithium nickel manganese oxide, lithium nickel cobalt manganese oxide, and lithium nickel cobalt aluminum oxide; and a compound derived from transition metal or non-transition metal. Further optionally, the positive electrode active substance of the battery in some embodiments of this application can be a laminated lithium-containing oxide, a spinel-type lithium-containing oxide, or an olivine-type lithium-containing phosphate compound. It should be noted that the positive electrode active substance of the battery in some embodiments of this application is not limited to the foregoing materials and can include other conventional materials known to be used as positive electrode active substances in lithium-ion batteries. In addition, one type of the foregoing positive active substances may be used alone, or two or more types may be used in combination.

Further optionally, in some embodiments, the positive electrode active substance of the battery in some embodiments of this application can include, but is not limited to, a nickel cobalt manganese ternary material.

In some embodiments, based on the foregoing embodiments, the negative electrode active substance of the battery in some embodiments of this application can include silicon material and carbon material, where the silicon material can include elemental silicon and/or a silicon-containing compound; and/or the carbon material can include at least one of natural graphite, synthetic graphite, mesocarbon microbeads (MCMB), hard carbon, and soft carbon.

Optionally, the silicon-containing compound in some embodiments of this application can be at least one of SiOx and silicon carbon, where $0 \leq x < 2$.

Optionally, the carbon material in some embodiments of this application can include, but is not limited to, natural graphite and synthetic graphite.

In some embodiments, based on the foregoing embodiments, a proportion of the positive electrode active substance in the positive electrode material layer of the battery in some embodiments of this application can range from 90% to 99%. Optionally, the proportion of the positive electrode active substance in the positive electrode material layer of the battery in some embodiments of this application can range from 95% to 98%.

For example, the proportion of the positive electrode active substance in the positive electrode material layer of the battery in some embodiments of this application can include, but is not limited to: 90%, 92%, 94%, 95%, 97%, 98%, 99%, or any value in a range between any two of the above values.

In some embodiments, based on the foregoing embodiments, a proportion of the negative electrode active substance in the negative electrode material layer of the battery in some embodiments of this application can range from 90% to 99%. Optionally, the proportion of the negative electrode active substance in the negative electrode material layer of the battery in some embodiments of this application can range from 92% to 97%.

For example, the proportion of the negative electrode active substance in the negative electrode material layer of the battery in some embodiments of this application can include, but is not limited to: 90%, 92%, 94%, 95%, 97%, 98%, 99%, or any value in a range between any two of the above values.

In some embodiments, based on the foregoing embodiments, a preparation method of the battery in some embodiments of this application is described.

Battery preparation parameters can be determined based on the NP ratio (or designed NP ratio) of the battery determined according to the foregoing embodiments, in order to prepare the battery using the battery preparation parameters.

The battery preparation parameters in some embodiments of this application can include but are not limited to positive electrode preparation parameters and negative electrode preparation parameters.

The following embodiments of this application describe the preparation methods of the positive electrode plate and the negative electrode plate in order.

The positive electrode preparation parameters in some embodiments of this application can include but are not limited to at least one of the coating weight per unit area of the positive electrode, the capacity per gram of the positive electrode active substance, and the proportion of the positive electrode active substance.

For example, based on the capacity per gram of the positive electrode active substance and the proportion of the positive electrode active substance in the positive electrode preparation parameters, the positive electrode active substance can be determined. Further, the positive electrode active substance, a conductive agent, and binders are mixed according to a first mixing mass ratio in a first solvent to prepare a positive electrode slurry, where the first mixing mass ratio indicates the mixing ratio of the positive electrode active substance, the conductive agent, and the binders. Further, the positive electrode slurry is applied onto the positive electrode current collector based on the coating weight per unit area of the positive electrode in the positive electrode preparation parameters, followed by drying, cold pressing, die cutting, and slitting at a preset temperature, to obtain the positive electrode plate.

The negative electrode preparation parameters in some embodiments of this application can include but are not limited to at least one of the coating weight per unit area of the negative electrode, the capacity per gram of the negative electrode active substance, and the proportion of the negative electrode active substance.

For example, based on the capacity per gram of the negative electrode active substance and the proportion of the negative electrode active substance in the negative electrode preparation parameters, the negative electrode active substance can be determined. Further, the carbon material in the negative electrode active substance, the silicon material in the negative electrode active substance, a conductive agent, a thickener, and binders are mixed according to a second mixing mass ratio in a second solvent to prepare the negative electrode slurry, where the second mixing mass ratio indicates a mixing ratio of the carbon material in the negative electrode active substance, the silicon material in the negative electrode active substance, the conductive agent, the thickener, and the binders. Further, the negative electrode slurry is applied onto the negative electrode current collector based on the coating weight per unit area of the negative electrode in the negative electrode preparation parameters, followed by drying and cold pressing at a preset temperature, to obtain the negative electrode plate.

Further, the separator can be prepared according to separator preparation parameters, and the electrolyte can be prepared according to electrolyte preparation parameters, in order to prepare the battery using the foregoing positive electrode plate, negative electrode plate, separator, and electrolyte.

The following embodiments of this application describe preparation processes of the separator and electrolyte of the battery in order.

For example, a separator matrix and a mixing weight ratio can be determined based on the separator preparation parameters, where the mixing weight ratio indicates a mixing ratio of inorganic alumina powder, polyvinylpyrrolidone, and acetone solvent. Further, the inorganic alumina powder, polyvinylpyrrolidone, and acetone solvent are mixed according to the mixing weight ratio to prepare the slurry. Further, the slurry is applied onto the separator matrix and dried to obtain the separator.

For example, the electrolyte matrix and the mixing solvent can be determined based on the electrolyte preparation parameters. Further, the electrode material matrix can be dissolved in the mixing solvent to obtain the electrolyte.

Further, the positive electrode plate, negative electrode plate, and separator can be wound or stacked to form a bare cell. Then the bare cell was packaged, injected with electrolyte, following by formation and degassing in sequence, to produce a battery.

Since the positive electrode preparation parameters and negative electrode preparation parameters in some embodiments of this application are determined based on the designed NP ratio described in the foregoing embodiments, the negative electrode potential corresponding to the upper limit of the SOC of the battery prepared in the embodiments of this application is higher than the potential for crystalline phase formation, thereby preventing the occurrence of memory effects during battery usage. This facilitates maximizing the utilization of the battery capacity, thereby improving the energy utilization efficiency of the battery.

In some embodiments, the outer package of the battery in some embodiments of this application may be a hard shell, for example, a hard plastic shell, an aluminum shell, or a steel shell. The outer package of the battery in some embodiments of this application may alternatively be a soft pack, for example, a soft pouch. A material of the soft pack may be plastic. As the plastic, polypropylene, polybutylene terephthalate, polybutylene succinate, and the like may be listed.

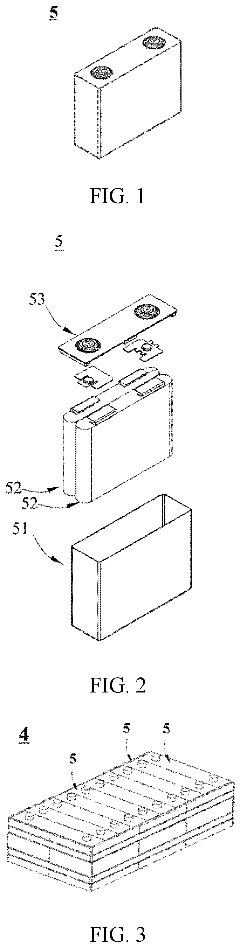

The battery is not particularly limited in shape in the embodiments of this application, and may be cylindrical, rectangular, or of any other shapes. For example, FIG. 1 is a battery 5 of a rectangular structure as an example.

In some embodiments, referring to FIG. 2, the outer package may include a housing 51 and a cover plate 53. The housing 51 may include a base plate and a side plate that is joined to the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the battery 5, and persons skilled in the art may make choices according to specific actual requirements.

In some embodiments, the secondary battery in some embodiments of this application may be used to assemble a battery module, and the battery module may include one or more secondary batteries. The specific quantity may be adjusted based on use and capacity of the battery module.

FIG. 3 shows a battery module 4 as an example. Referring to FIG. 3, in the battery module 4, multiple batteries 5 may be sequentially arranged in a length direction of the battery module 4. Certainly, the batteries may alternatively be arranged in any other manner. Further, the multiple batteries 5 may be fastened by using fasteners.

Optionally, the battery module 4 may further include a housing with an accommodating space, and the multiple batteries 5 are accommodated in the accommodating space.

In some embodiments, the battery module may be further assembled into a battery pack, and the battery pack may include one or more battery modules. The specific quantity may be chosen by persons skilled in the art according to the use and capacity of the battery pack.

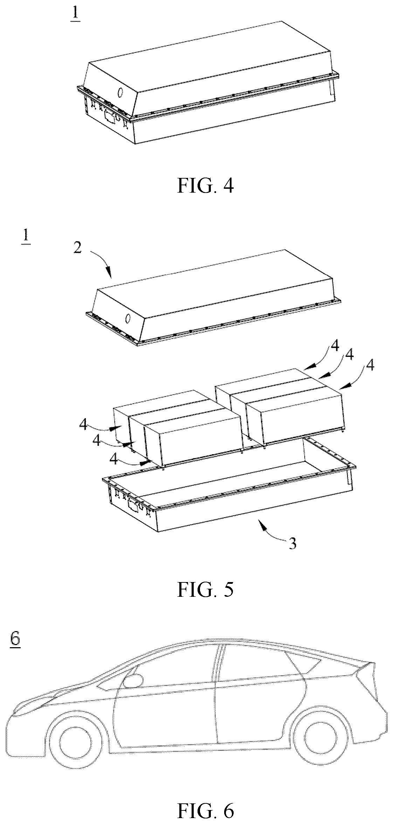

FIG. 4 and FIG. 5 show a battery pack 1 as an example. Refer to FIG. 4 and FIG. 5. The battery pack 1 may include a battery box and multiple battery modules 4 arranged in the battery box. The battery box includes an upper box body 2 and a lower box body 3. The upper box body 2 can cover the lower box body 3 to form an enclosed space for accommodating the battery modules 4. The multiple battery modules 4 may be arranged in the battery box in any manner.

In some embodiments, an electric apparatus is provided, where the electric apparatus may include the battery in the foregoing embodiments of this application. It should be understood that the battery in some embodiments of this application may be used as a power source of the electric apparatus or an energy storage unit of the electric apparatus.

For example, the electric apparatus may include a mobile device (for example, a mobile phone or a notebook computer), a tablet computer, a laptop computer, an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

FIG. 6 shows an electric apparatus as an example. This electric apparatus may be a battery electric vehicle, a hybrid electric vehicle, a plug-in hybrid electric vehicle, or the like. To satisfy requirements of the electric apparatus for high power and high energy density of the battery, a battery pack or a battery module may be used.

To describe the technical problems solved by this application, technical solutions, and beneficial effects of this application more clearly, the following further describes this application in detail with reference to the embodiments and accompanying drawings. Apparently, the described embodiments are merely some but not all of the embodiments of this application. The following description of at least one exemplary embodiment is merely illustrative and definitely is not construed as any limitation on this application or on use of this application. All other embodiments obtained by a person of ordinary skill in the art based on the embodiments of this application without creative efforts shall fall within the protection scope of this application.

Examples whose technical solutions or conditions are not specified are made in accordance with technical solutions or conditions described in literature in the field, or made in accordance with product instructions. The reagents or instruments used are all conventional products that are commercially available if no manufacturer is indicated.

Example 1

(1) Based on the capacity per gram of the positive electrode active substance and the proportion of the positive electrode active substance in the positive electrode preparation parameters, the positive electrode active substance was determined to be nickel cobalt manganese ternary material (NCM811). Further, according to a first mixing mass ratio, the nickel cobalt manganese ternary material (NCM811), a conductive agent acetylene black, and a binder polyvinylidene fluoride (PVDF) were uniformly mixed and added to a first solvent N-methyl-2-pyrrolidone (NMP) to prepare a positive electrode slurry. The first mixing mass ratio could be 97:2:1. Further, the positive electrode slurry was applied onto the positive electrode current collector aluminum foil based on the coating weight per unit area of the positive electrode in the positive electrode preparation parameters, followed by drying, cold pressing, die cutting, and slitting at a preset temperature 85°C, to obtain the positive electrode plate. It should be noted that the designed NP ratio of the battery in this example can be 1.105.

It should be noted that the conductive agent, binder, first solvent, and positive electrode current collector in the foregoing embodiments are exemplary and can be replaced with other materials. The first mixing mass ratio and the preset temperature in the foregoing embodiments are also exemplary and can have other values. This is not limited in some embodiments of this application.

(2) Based on the capacity per gram and the proportion of the negative electrode active substance in the negative electrode preparation parameters, the negative electrode active substance was determined to include graphite and silicon oxide, where the weight percentage of silicon oxide in the negative electrode active substance could be 3%. Further, according to a second mixing mass ratio, the graphite, silicon oxide in the negative electrode active substance, conductive agent acetylene black, thickener sodium carboxymethyl cellulose (CMC), and binder styrene-butadiene rubber (SBR) were mixed well and added to the second solvent water to prepare a negative electrode slurry. The second mixing mass ratio could be 72:24:2: 1: 1. Further, the negative electrode slurry was applied onto the negative electrode current collector based on the coating weight per unit area of the negative electrode in the negative electrode preparation parameters, followed by drying and cold pressing at a preset temperature 85°C, to obtain the negative electrode plate, where the coating weight per unit area of the negative electrode could be 10.8 mg/cm$^2$.

It should be noted that the conductive agent, thickener, binder, second solvent, and negative electrode current collector in the foregoing embodiments are exemplary and can be replaced with other materials. The second mixing mass ratio and the preset temperature in the foregoing embodiments are also exemplary and can have other values. This is not limited in some embodiments of this application.

(3) Based on the separator preparation parameters, the separator matrix was determined to be microporous polyethylene film, and the mixing weight ratio was determined to be 3:1.5:5.5. Further, the inorganic alumina powder, polyvinylpyrrolidone, and acetone solvent were mixed well according to the mixing weight ratio to prepare the slurry. Further, the slurry was applied onto one surface of the separator matrix and dried to obtain the separator.

It should be noted that the foregoing separator matrix and mixing materials are exemplary and can be replaced with other materials. The mixing weight ratio in the foregoing is also exemplary and can have other values. This is not limited in this application.

(4) Based on the electrolyte preparation parameters, the electrolyte matrix was determined to be lithium salt, and the mixing solvent was a solvent prepared by mixing ethylene carbonate, dimethyl carbonate, and methyl ethyl carbonate according to a preset volume ratio, where the preset volume ratio could be 1:2:1. Further, the electrode material matrix lithium salt was dissolved in the mixing solvent to prepare the electrolyte.

It should be noted that the electrolyte matrix and mixed solvents in the foregoing embodiments are exemplary and can be replaced with other materials. The mixing volume ratio in the foregoing embodiments is also exemplary and can have other values. This is not limited in this application.

(5) The positive electrode plate, negative electrode plate, and separator can be wound or stacked to form a bare cell. Then the bare cell was packaged, injected with electrolyte, following by formation and degassing in sequence, to produce a battery.

Example 2

Example 2 differs from Example 1 in that the coating weight per unit area of the positive electrode remained unchanged, while the coating weight per unit area of the negative electrode was increased to 10.9 mg/cm$^2$. The designed NP ratio of the battery in this example could be 1.12.

Example 3

Example 3 differs from Example 1 in that the coating weight per unit area of the positive electrode remained unchanged, while the coating weight per unit area of the negative electrode was increased to 11.2 mg/cm$^2$. The designed NP ratio of the battery in this example could be 1.15.

Example 4

Example 4 differs from Example 1 in that the coating weight per unit area of the positive electrode remained unchanged, while the coating weight per unit area of the negative electrode was increased to 11.7 mg/cm$^2$. The designed NP ratio of the battery in this example could be 1.2.

Example 5

Example 5 differs from Example 1 in that the weight percentage of silicon oxide in the negative electrode active substance could be 15%. The designed NP ratio of the battery in this example could be 1.105.

Example 6

Example 6 differs from Example 4 in that the weight percentage of silicon oxide in the negative electrode active substance could be 15%. The designed NP ratio of the battery in this example could be 1.2.

Example 7

Example 7 differs from Example 1 in that the weight percentage of silicon oxide in the negative electrode active substance could be 25%. The designed NP ratio of the battery in this example could be 1.105.

Example 8

Example 8 differs from Example 2 in that the weight percentage of silicon oxide in the negative electrode active substance could be 25%. The designed NP ratio of the battery in this example could be 1.12.

Example 9

Example 9 differs from Example 3 in that the weight percentage of silicon oxide in the negative electrode active substance could be 25%. The designed NP ratio of the battery in this example could be 1.15.

Example 10

Example 10 differs from Example 4 in that the weight percentage of silicon oxide in the negative electrode active substance could be 25%. The designed NP ratio of the battery in this example could be 1.2.

Example 11

Example 11 differs from Example 1 in that the weight percentage of silicon oxide in the negative electrode active substance could be 50%. The designed NP ratio of the battery in this example could be 1.105.

Example 12

Example 12 differs from Example 2 in that the weight percentage of silicon oxide in the negative electrode active substance could be 50%. The designed NP ratio of the battery in this example could be 1.12.

Example 13

Example 13 differs from Example 3 in that the weight percentage of silicon oxide in the negative electrode active substance could be 50%. The designed NP ratio of the battery in this example could be 1.15.

Example 14

Example 14 differs from Example 4 in that the weight percentage of silicon oxide in the negative electrode active substance could be 50%. The designed NP ratio of the battery in this example could be 1.2.

Comparative example 1

Comparative example 1 differs from Example 1 in that the coating weight per unit area of the positive electrode remained unchanged, while the coating weight per unit area of the negative electrode was decreased to 10.2 mg/cm$^2$. The designed NP ratio of the battery in this example could be 1.04.

Comparative example 2

Comparative example 2 differs from Example 1 in that the coating weight per unit area of the positive electrode remained unchanged, while the coating weight per unit area of the negative electrode was decreased to 10.4 mg/cm$^2$. The designed NP ratio of the battery in this example could be 1.07.

Comparative example 3

Comparative example 3 differs from Example 5 in that the coating weight per unit area of the positive electrode remained unchanged, while the coating weight per unit area of the negative electrode was decreased to 7.4 mg/cm$^2$. The designed NP ratio of the battery in this example could be 1.04.

Comparative example 4

Comparative example 4 differs from Example 7 in that the coating weight per unit area of the positive electrode remained unchanged, while the coating weight per unit area of the negative electrode was decreased to 6.0 mg/cm$^2$. The designed NP ratio of the battery in this example could be 1.04.

Comparative example 5

Comparative example 5 differs from Example 7 in that the coating weight per unit area of the positive electrode remained unchanged, while the coating weight per unit area of the negative electrode was decreased to 6.2 mg/cm$^2$. The designed NP ratio of the battery in this example could be 1.07.

Comparative example 6

Comparative example 6 differs from Example 11 in that the coating weight per unit area of the positive electrode remained unchanged, while the coating weight per unit area of the negative electrode was decreased to 4.1 mg/cm$^2$. The designed NP ratio of the battery in this example could be 1.04.

**Table 1: Test parameters table for batteries with different silicon material content and/or different designed NP ratios**

| Experiment | Silicon material content | Designed NP ratio | Occurrence of memory effect? | Critical SOC |
|---|---|---|---|---|
| Example 1 | 3% | 1.105 | No | NA |
| Example 2 | 3% | 1.12 | No | NA |
| Example 3 | 3% | 1.15 | No | -NA |
| Example 4 | 3% | 1.2% | No | NA |
| Example 5 | 15% | 1.105 | No | NA |
| Example 6 | 15% | 1.2 | No | NA |
| Example 7 | 25% | 1.105 | No | NA |
| Example 8 | 25% | 1.12 | No | NA |
| Example 9 | 25% | 1.15 | No | NA |
| Example 10 | 25% | 1.2 | No | NA |
| Example 11 | 50% | 1.105 | No | NA |
| Example 12 | 50% | 1.12 | No | NA |
| Example 13 | 50% | 1.15 | No | NA |
| Example 14 | 50% | 1.2 | No | NA |
| Comparative example 1 | 3% | 1.04 | Yes | 94.1% |
| Comparative example 2 | 3% | 1.07 | Yes | 96.8% |
| Comparative example 3 | 15% | 1.04 | Yes | 94.1% |
| Comparative example 4 | 25% | 1.04 | Yes | 94.1% |
| Comparative example 5 | 25% | 1.07 | Yes | 96.8% |
| Comparative example 6 | 50% | 1.04 | Yes | 94.1% |

Throughout comparison between examples 1-4 and comparative examples 1-2, examples 5-6 and comparative example 3, examples 7-10 and comparative examples 4-5, or examples 11-14 and comparative example 6, it can be seen that increasing the designed NP ratio can increase the corresponding critical SOC, regardless of the silicon oxide content in the negative electrode active substance. When the designed NP ratio is greater than or equal to 1.105, the battery does not exhibit a critical SOC, meaning that the battery does not experience memory effects within any SOC range.

It should be noted that no memory effect occurs when the SOC of battery is at the critical SOC, but once the SOC exceeds the critical SOC, memory effects may occur. Since 100% represents the upper limit of the SOC of the battery, the critical SOC of the battery being 100% can be understood as the absence of memory effects within any SOC range.

Throughout comparison between comparative examples 1, 3, 4, and 6, or comparative example 2 and comparative example 5, it can be seen that at the same designed NP ratio, batteries with different silicon material content exhibit the same memory effect parameters. The memory effect parameters of the battery can include but are not limited to the "Existence of memory effect" parameter and the critical SOC parameter in Table 1.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. A battery, **characterized in that** a ratio of a capacity per unit area of a negative electrode to a capacity per unit area of a positive electrode is an NP ratio, wherein the NP ratio of the battery is greater than or equal to 1.105.

2. The battery according to claim 1, **characterized in that** the NP ratio of the battery is greater than or equal to 1.105 and less than or equal to 1.2.

3. The battery according to claim 2, **characterized in that** a weight percentage of silicon material in negative electrode active substance of the battery is 3% to 50%; optionally, the weight percentage of silicon material in the negative electrode active substance of the battery is 3% to 25%.

4. The battery according to any one of claims 1 to 3, **characterized in that** a coating weight per unit area of the positive electrode ranges from 6.5 mg/cm$^2$ to 29 mg/cm$^2$; optionally, the coating weight per unit area of the positive electrode ranges from 9 mg/cm$^2$ to 21 mg/cm$^2$; and/or
the coating weight per unit area of the negative electrode ranges from 3.9 mg/cm$^2$ to 16 mg/cm$^2$; optionally, the coating weight per unit area of the negative electrode ranges from 3.9 mg/cm$^2$ to 13 mg/cm$^2$.

5. The battery according to any one of claims 1 to 3, **characterized in that** a capacity per gram of the positive electrode active substance ranges from 130 mAh/g to 230 mAh/g; optionally, the capacity per gram of the positive electrode active substance ranges from 150 mAh/g to 218 mAh/g; and/or
a capacity per gram of the negative electrode active substance ranges from 340 mAh/g to 800 mAh/g; optionally, the capacity per gram of the negative electrode active substance ranges from 360 mAh/g to 700 mAh/g.

6. The battery according to claim 5, **characterized in that** the positive electrode active substance is capable of deintercalating and intercalating lithium ions; optionally, the positive electrode active substance comprises:

   one or more of lithium cobalt oxide, lithium nickel oxide, lithium manganese oxide, lithium nickel manganese oxide, lithium nickel cobalt manganese oxide, and lithium nickel cobalt aluminum oxide; and
   a compound derived from transition metal or non-transition metal;
   further optionally, the positive electrode active substance comprises a nickel cobalt manganese ternary material.

7. The battery according to claim 5, **characterized in that** the negative electrode active substance comprises a silicon material and a carbon material; wherein the silicon material comprises elemental silicon and/or a silicon-containing compound; and/or

the carbon material comprises at least one of natural graphite, synthetic graphite, mesocarbon microbeads, hard carbon, and soft carbon.

8. The battery according to claim 7, **characterized in that** the silicon-containing compound is at least one of SiOx and silicon carbon, wherein $0 \leq x < 2$; and/or
the carbon material comprises natural graphite and synthetic graphite.

9. The battery according to claim 5, **characterized in that** a proportion of the positive electrode active substance in the positive electrode material layer ranges from 90% to 99%; optionally, the proportion of the positive electrode active substance in the positive electrode material layer ranges from 95% to 98%; and/or
a proportion of the negative electrode active substance in the negative electrode material layer ranges from 90% to 99%; optionally, the proportion of the negative electrode active substance in the negative electrode material layer ranges from 92% to 97%.

10. An electric apparatus, **characterized by** comprising the battery according to any one of claims 1 to 9.

5

FIG. 1

5

53

52

52

51

FIG. 2

4

5

5

5

FIG. 3

FIG. 4

FIG. 5

FIG. 6

## INTERNATIONAL SEARCH REPORT

| | International application No. |
|---|---|
| | **PCT/CN2022/131242** |

| A. | CLASSIFICATION OF SUBJECT MATTER |
|---|---|

H01M10/058(2010.01)i;H01M10/0525(2010.01)i;H01M4/139(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 电池, 正极, 负极, 容量比, 过量系数, NP比, battery, batteries, positive, negative, capacity, ratio, excess, factor, relative

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112242551 A (NINGDE CONTEMPORARY AMPEREX TECHNOLOGY CO., LTD.) 19 January 2021 (2021-01-19) claims 1-10, and description, paragraphs 0016-0085 | 1-10 |
| X | CN 103441305 A (SHENZHEN BTR NEW ENERGY MATERIALS CO., LTD.) 11 December 2013 (2013-12-11) claims 1-10, and description, paragraphs 0002-0035 | 1-10 |
| X | CN 102576901 A (PANASONIC CORP.) 11 July 2012 (2012-07-11) claims 1-12, and description, paragraphs 0015-0031 | 1-10 |
| A | CN 114695968 A (SICHUAN NEW ENERGY VEHICLE INNOVATION CENTER CO., LTD.) 01 July 2022 (2022-07-01) entire document | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 April 2023** | **18 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/131242**

| Patent document cited in search report | | | Publication date (day/month/year) | Patent family member(s) | | | Publication date (day/month/year) |
|---|---|---|---|---|---|---|---|
| CN | 112242551 | A | 19 January 2021 | WO | 2021008429 | A1 | 21 January 2021 |
| | | | | EP | 3800707 | A1 | 07 April 2021 |
| | | | | US | 2021151751 | A1 | 20 May 2021 |
| | | | | EP | 3800707 | A4 | 13 October 2021 |
| | | | | CN | 112242551 | B | 07 December 2021 |
| | | | | US | 11316158 | B2 | 26 April 2022 |
| CN | 103441305 | A | 11 December 2013 | CN | 103441305 | B | 21 September 2016 |
| CN | 102576901 | A | 11 July 2012 | WO | 2011145301 | A1 | 24 November 2011 |
| | | | | JPWO | 2011145301 | A1 | 22 July 2013 |
| | | | | US | 2012208087 | A1 | 16 August 2012 |
| | | | | US | 8568925 | B2 | 29 October 2013 |
| CN | 114695968 | A | 01 July 2022 | CN | 114695968 | B | 02 September 2022 |

Form PCT/ISA/210 (patent family annex) (July 2022)